Europäisches Patentamt

European Patent Office

Office européen des brevets

(11) Publication number: **0 264 995**
**A1**

## (12) EUROPEAN PATENT APPLICATION

(21) Application number: 87201884.1

(22) Date of filing: 02.10.87

(51) Int. Cl.⁴: **C09D 5/08** , C09D 3/36

(30) Priority: 06.10.86 LU 86623

(43) Date of publication of application:
27.04.88 Bulletin 88/17

(84) Designated Contracting States:
AT BE CH DE ES FR GB GR IT LI NL SE

(71) Applicant: Kotas, Jolanta
H. Consciencelaan 47
B-2510 Mortsel(BE)

(72) Inventor: Kotas, Jolanta
H. Consciencelaan 47
B-2510 Mortsel(BE)

(74) Representative: Debrabandere, René et al
Vereenigde Octrooibureaux Belgie N.V.
Charlottalei 48
B-2018 Antwerpen(BE)

(54) **Rust transformer.**

(57) The rust transformer is an aqueous solution comprising as active substance 5 to 10 weight-% tannin , gallic acid or a similar compound, and besides this 65 to 89 wieght-% butadiene-styrene copolymer,3.2 to 3.5 weight-% wetting agent, 2.2 to 2.5 weight-% of a foam-inhibiting product and 0.15 to 0.20 weight-% of a siccative.

EP 0 264 995 A1

## "Rust transformer".

This invention relates to a rust transformer comprised of a solution which contains tannin , gallic acid or a similar compound as active rust-inhibiting substance.

The corrosion-inhibiting action of tannin , that is tannic acid, of gallic acid or similar compounds has already been known for a long time. Such compounds do indeed form together with the Fe(III) salts, compounds with a dark blue to black colour, and thus transform iron oxide into a dark and hard protection layer which prevents the rust spreading.

The known rust transformers of this kind do however require applying at least two layers of that solution comprising the active substance, to obtain an effective protection against rust. Moreover, applying paint, putty and other metal-coating products on such layers raises problems. The drying time for said known rust transformers is relatively long (from 2 h to 24 h).

The invention has for object to obviate such drawbacks and to provide a rust transformer which is comprised of a solution based on tannin , gallic acid or a similar chemical compound, the application thereof as a single layer or coat is enough to give an effective protection against rust, the rust transformer allowing thereafter without problems and without requiring an intermediate coat, to apply paint or any other metalcoating products, and said transformer having a shortened drying time.

For this purpose, the solution comprises besides said active substance, at least one butadiene-styrene copolymer, and at least one wetting agent.

In a particular embodiment of the invention, the solution comprises from 5 to 10 weight-% tannin or gallic acid, or similar compound.

In an effective embodiment of the invention, the solution comprises 75 to 89 weight-% of butadiene-styrene copolymer.

In an advantageous embodiment of the invention, the wetting agent is ethylene glycol.

In a preferred embodiment of the invention, the solution comprises a foam-inhibiting product.

An effective foam-inhibiting product is ethyl glycol.

In another effective embodiment of the invention, the solution comprises a siccative.

Such siccative is preferably a cobalt salt, particularly cobalt octoate.

In this embodiment, the drying time may be shortened to 30 to 40 minutes.

Other details and advantages of the invention will stand out from the following description of a rust transformer according to the invention, given hereinafter by way of non limitative example.

The rust transformer according to the invention is an aqueous solution which comprises as rust-inhibiting active substance, tannin or tannic acid, gallic acid or a similar compound.

The amount of said active substance lies between 5 and 10 weight-% relative to the weight of the final solution.

An effective tannin is that tannin brought in the trade under the trade-mark TANEX RS 93 by Omnichem.

Besides said active substance, the solution comprises 75 to 80 wieght-% of a water-soluble, carboxylated butadiene-styrene copolymer.

A suitable copolymer is the LITEX C.A. copolymer from Chemische Werke Hüls.

The solution further comprises 2.2 to 2.5 weight-% of a wetting agent, particularly ethylene glycol.

Said wetting agent opposes the tendency water-based rust transformers have for being repulsed by rust, and insures a perfect coating of the rust with the combination of active substance and copolymer.

A complete reaction of all the rust with the active substance and a complete partition of the rust from the atmosphere, results therefrom.

The combination of active substance and copolymer forms over the rust, a film which is impervious to steam and salts and can be painted or coated with any conventional metal-coating product, such as putty, without requiring an intermediate layer or coat.

Said particular combination has a very short drying time. Such drying time may still be shortened to 30 to 40 minutes by adding 0.16 to 0.20 weight-% relative to the solution, of a siccative, particularly a cobalt salt.

Cobalt octoate, preferably with 12% cobalt, is particularly effective.

To prevent the forming of foam and at the same time improving fluidity and brightness, the solution comprises 3.3 to 3.5 weight-% of foam-inhibiting agent.

An effective foam-inhibiting agent is ethylene glycol.

The solution remainder is comprised of distilled water. The pH of the solution is about 8.5.

The invention will be illustrated with further detail by means of the following example.

The solution comprises:

9.80 weight-% tannin (TANEX RS 93 from Omnichem)

84.00 weight-% carboxylated butadiene-styrene copolymer (LITEX C.A. since october 1987 LIPATON SB 5510 from Chemische Werke Hüls).

3.50 weight-% ethyl glycol
2.50 weight-% ethylene glycol
0.16 weight-% cobalt octoate (12 %)
0.04 weight-% distilled water.

Said solution has a drying time from 30 to 40 minutes. After drying, the solution forms a homogeneous film coating continuously the rust which has been transformed by the tannin into a black iron compound.

The above mentioned solution or dispersion on water-basis can be applied on all metals, as well with as without rust. The rust is completely moistened and the solution forms a water-and airtight layer protecting the metal. One layer is enough.

The time for drying is extremely short (30 to 40 minutes) due to the choice of the components.

Metal coated with the product according to the invention did show no rust after 300 to 500 hours being in a salt-mist.

The dried layer or coat may be coated directly with a finishing coat such as polyester ,an epoxy resin , chlorinated ruber,acrylate and all kinds of paints. Such products will adhere well to the rust transformer coat.

The invention is in no way limited to the above description and many changes might be brought thereto, notably as to the composition and the number of components being used in the embodying thereof.

**Claims**

1. Rust transformer comprised of a solution which contains tannin , gallic acid or a similar compound as active rust-inhibiting substance, characterized in that the solution comprises besides said active substance, at least one butadiene-styrene copolymer, and at least one wetting agent.

2. Rust transformer according to claim 1, characterized in that the copolymer is a water-soluble, carboxylated butadiene-styrene copolymer.

3. Rust transformer according to either one of the preceding claims, characterized in that the solution comprises from 5 to 10 weight-% tannin , gallic acid, or of a similar compound.

4. Rust transformer according to any one of the preceding claims, characterized in that the solution comprises 65 to 89 weight-% of butadiene-styrene copolymer.

5. Rust transformer according to any one of the preceding claims, characterized in that the solution comprises between 3.2 and 3.5 weight-% wetting agent.

6. Rust transformer according to any one of the preceding claims, characterized in that the wetting agent is ethylene glycol.

7. Rust transformer according to any one of the preceding claims, characterized in that the solution further comprises a foam-inhibiting product.

8. Rust transformer according to claim 7, characterized in that the solution comprises 2.2 to 2.5 weight-% of foam-inhibiting product.

9. Rust transformer according to either one of claims 7 and 8, characterized in that the foam-inhibiting product is ethyl glycol.

10. Rust transformer according to any one of the preceding claims, characterized in that the solution further comprises a siccative.

11. Rust transformer according to claim 10, characterized in that the solution comprises between 0.15 and 0.20 weight-% siccative.

12. Rust transformer according to either one of claims 10 and 11, characterized in that the siccative is a cobalt salt.

13. Rust transformer according to claim 12, characterized in that the siccative is cobalt octoate.

14. Rust transformer according to any one of the preceding claims, characterized in that the solution is an aqueous solution, the butadiene-styrene copolymer being water-soluble.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 075 538 (APPLIED COATINGS TECHNOLOGY)<br>* Claims 1,6,7; examples 6,7,12-15; page 6, line 29 *<br>--- | 1-9,14 | C 09 D 5/08<br>C 09 D 3/36 |
| X | FR-A-2 254 653 (PEIER)<br>* Claims 1,2; examples 5,7 *<br>--- | 1-9,14 | |
| A | EP-A-0 199 346 (ENVIRO-CHEMIE AG)<br>* Claim 2 *<br>--- | 5-9 | |
| A | US-A-4 462 829 (A. HEISS)<br>* Claim 10; column 5, line 46 *<br>----- | 10-12 | |

TECHNICAL FIELDS SEARCHED (Int. Cl.4)

C 09 D

The present search report has been drawn up for all claims

| Place of search | Date of completion of the search | Examiner |
|---|---|---|
| THE HAGUE | 25-01-1988 | VAN HUMBEECK F.W.C. |